# EUROPEAN PATENT SPECIFICATION

(11) **EP 1 944 230 B1**
(45) Date of publication and mention of the grant of the patent: **27.10.2010**
(21) Application number: 07013009.1
(22) Date of filing: 03.07.2007
(51) Int. Cl.: B62M 9/12

(54) **Bicycle front derailleur**
Vorderer Umwerfer für ein Fahrrad
Dérailleur avant pour bicyclette

(30) Priority: 09.01.2007 US 651055
(43) Date of publication of application: 16.07.2008
(73) Proprietor: Shimano (Singapore) Private Limited, Singapore 629852 (SG)
(72) Inventor: Siah, Peh Lian, Jurong Town Singapore 629852 (SG)
(74) Representative: GROSSE SCHUMACHER KNAUER VON HIRSCHHAUSEN

(56) References cited:
- EP-A- 1 447 317
- DE-A1- 3 714 169
- FR-A- 2 597 059
- FR-A- 2 597 060
- US-A- 4 194 409

## Description

### BACKGROUND OF THE INVENTION

### Field of the Invention

This invention generally relates to bicycle front derailleur. More specifically, the present invention relates to bicycle front derailleur for use with a front sprocket assembly having more than two chain rings.

### Background Information

Bicycling is becoming an increasingly more popular form of recreation as well as a means of transportation. Moreover, bicycling has become a very popular competitive sport for both amateurs and professionals. Whether the bicycle is used for recreation, transportation or competition, the bicycle industry is constantly improving the various components of the bicycle. One component that has been extensively redesigned is the bicycle front derailleur.

Conventional front derailleurs typically include a fixed member, pivot links, a movable member and a chain guide that is configured to move with the movable member relative to the fixed member. The fixed member is typically secured to a portion of the bicycle frame. The movable member and links are typically configured such that the movable member and the chain guide are movable in order to guide the chain between chain rings of a front sprocket assembly.

Most conventional front derailleurs are configured such that the chain guide is movable in a direction that is generally perpendicular to the length of the bicycle frame. Other front derailleurs are configured such that the chain guide is movable in a direction at an angle of 45 degrees from the length of the bicycle frame. A problem with such configurations is that the chain guide typically must be have a long length measured in a horizontal direction in order allow for movement of the chain as the chain is positioned on the differing outer diameters of the chain rings of the front sprocket assembly. An increase in the overall length of the chain guide is also required when more than two chain rings are present in the front sprocket assembly. The long length of the chain guide is undesirable because with the long overall length, a corresponding increase in metal is required to assure rigidity. The increase in metal increases the weight of the front derailleur.

In view of the above, it will be apparent to those skilled in the art from this disclosure that there exists a need for an improved front derailleur that provides weight reduction without sacrificing strength and operation of the front derailleur. This invention addresses this need in the art as well as other needs, which will become apparent to those skilled in the art from this disclosure.

EP 1 447 317 discloses a front derailleur according to the preamble of claim 1.

### SUMMARY OF THE INVENTION

One object of the present invention is to reduce the overall weight of a front derailleur.

Another object of the present invention is to provide a front derailleur that will operate with a front sprocket assembly having more than two chain rings without an overall increase in the length of the chain guide.

A bicycle front derailleur includes a fixed member, a movable member, a chain guide and a linking member. The fixed member is coupled to a bicycle frame. The movable member is movably coupled to the fixed member. The chain guide is coupled to the movable member and extends in a first direction approximately parallel with a lengthwise direction of the bicycle frame. The linking member extends between the fixed member and the movable member and is configured to move the chain guide in a second direction relative to the fixed member between at least a first chain ring position and a second chain ring position, the first and second directions crossing with an angle therebetween of between 50 and 70 degrees.

These and other objects, features, aspects and advantages of the present invention will become apparent to those skilled in the art from the following detailed description, which, taken in conjunction with the annexed drawings, discloses a preferred embodiment of the present invention.

### BRIEF DESCRIPTION OF THE DRAWINGS

Referring now to the attached drawings which form a part of this original disclosure:
Figure 1 a side elevational view of a bicycle showing a front derailleur and front sprocket assembly in accordance with one embodiment of the present invention;
Figure 2 is a perspective rear view of the front derailleur shown removed from the bicycle, showing a fixed member, a movable member, a chain guide and a first link of the front derailleur in accordance with one embodiment of the present invention;
Figure 3 is an exploded perspective view of the front derailleur showing the fixed member, the movable member, the chain guide and the first link in accordance with one embodiment of the present invention;
Figure 4 is a perspective view of the first link shown removed from the front derailleur in accordance with one embodiment of the present invention;
Figure 5 is a top view of the front derailleur shown removed from the bicycle in accordance with one embodiment of the present invention;
Figure 6 is a side schematic view of a portion of the bicycle showing the front derailleur, the chain and the front sprocket assembly with the chain guide of the front derailleur positioned with the chain positioned on the smallest of three chain rings in the front sprocket assembly in accordance with one embodiment of the present invention;
Figure 7 is a side schematic view similar to Figure 6 showing the front derailleur, the chain and the front sprocket assembly with the chain guide of the front derailleur positioned with the chain positioned on the mid-sized one of three chain rings in the front sprocket assembly in accordance with one embodiment of the present invention;
Figure 8 is a side schematic view similar to Figures 6 and 7 showing the front derailleur, the chain and the front sprocket assembly with the chain guide of the front derailleur positioned with the chain positioned on the largest of three chain rings in the front sprocket assembly in accordance with one embodiment of the present invention; and
Figure 9 is a top view of the front derailleur shown mounted on the bicycle three positions of the chain and chain guide one each of the three chain rings in the front sprocket assembly in accordance with one embodiment of the present invention.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

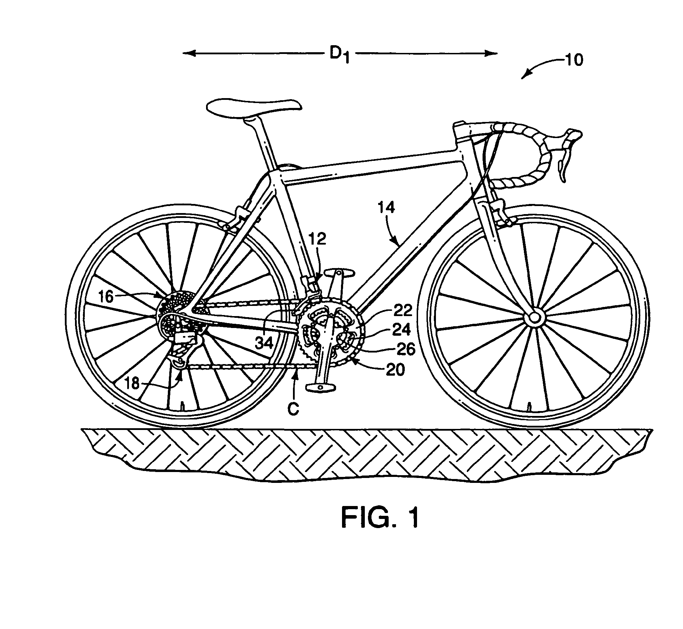

Referring initially to Figure 1, a bicycle 10 with a front derailleur 12 is illustrated in accordance with a first embodiment of the present invention. The bicycle 10 basically includes (among other things) a frame 14, a rear sprocket assembly 16, a rear derailleur 18, a front sprocket assembly 20, a chain C and the front derailleur 12. The frame 14 extends from front to back in a first direction D₁.

The rear sprocket assembly 16 includes a plurality of conventional chain rings. The rear derailleur 18 is configured to position the chain C relative to the chain rings of the rear sprocket assembly 16 in a conventional manner.

As shown in Figures 1 and 6-9, the front sprocket assembly 20 preferably includes three chain rings 22, 24 and 26. The chain rings 22, 24 and 26 can have any of a variety of combinations of numbers of gear teeth, such as a chain ring gear tooth combination of 50-30-20 (50 teeth on chain ring 22, 30 teeth on chain ring 24, and 20 teeth on chain ring 26), 38-32-22 (38 teeth on chain ring 22, 32 teeth on chain ring 24, and 22 teeth on chain ring 26), etc.

It should be understood that the number of teeth on each chainring (the chain ring gear tooth combination) can vary depending upon overall bicycle design, whether or not the bicycle is for road or off-road usage and the cyclists desired gear ratios. In other words, the specific chain ring gear tooth combination mentioned herein are only examples. Other combinations of chain rings can be used with the present invention.

As shown in Figure 1, the chain C extends between the front sprocket assembly 20 and the rear sprocket assembly 16.

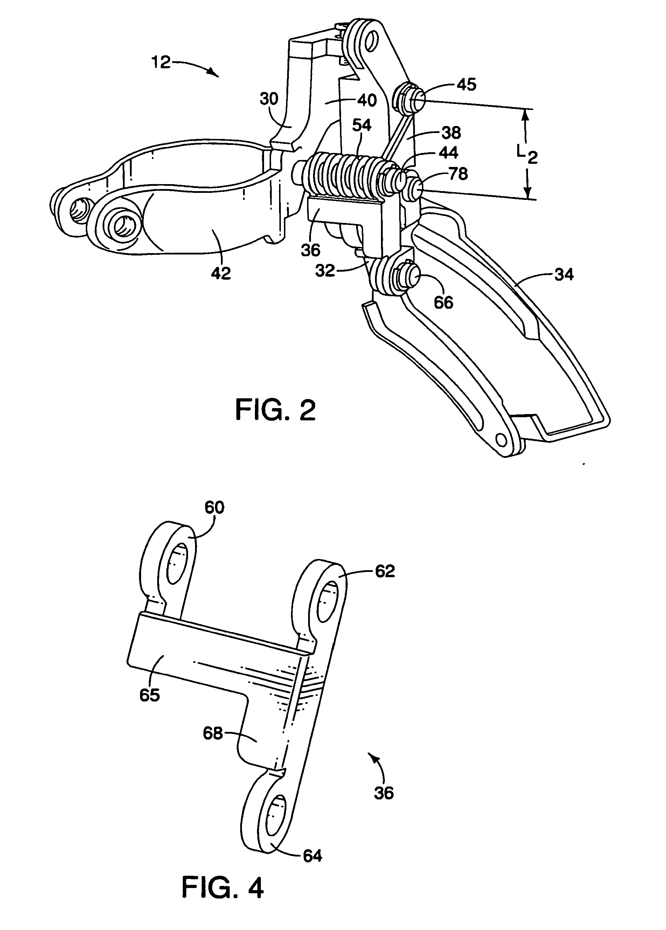

A description of the front derailleur 12 is now provided with specific reference to Figures 2-5. The front derailleur 12 basically includes a fixed member 30, a movable member 32, a chain guide 34, a first link 36 and a second link 38.

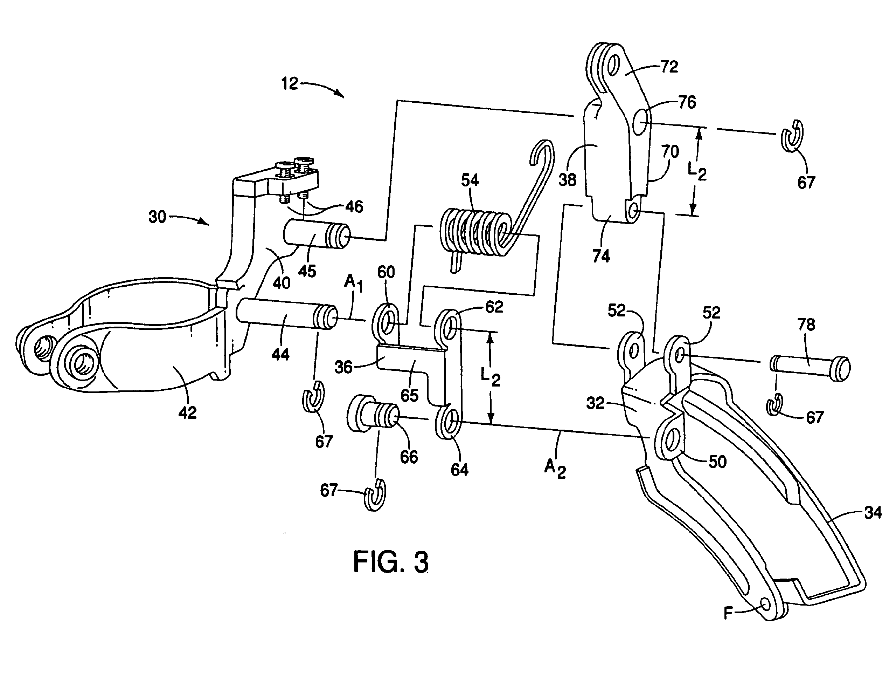

With reference to Figure 3, the fixed member 30 is preferably made of steel or similar material with properties similar to steel. The fixed member 30 basically includes a main body 40, a clamping portion 42, a pair of spaced apart pivot shafts 44 and 45, and a pair of stop position adjustment screws 46. The clamping portion 42 is configured to couple or clamp the fixed member 30 (and the front derailleur 12) to the frame 14. The pivot shafts 44 and 45 extend from the main body 40. The pivot shafts 44 and 45 can be separate elements that are welded or threaded in position to the main body 40 of the fixed member 30. The pivot shaft 44 is dimensioned to support the first link 36 and the pivot shaft 45 is dimensioned to support the second link 38, as described below.

With continuing reference to Figure 3, the movable member 32 is movably coupled to the fixed member 30 by the first and second links 36 and 38. The movable member 32 is also preferably made of steel. The movable member 32 includes a first pivot portion 50 and second pivot portions 52. There are two second pivot portions 52 that are axially aligned with one another. The second pivot portions 52 are spaced apart from one another by a distance dimensioned to receive one end of the second link 38. The first pivot portion 50 is spaced apart from the pivot portions 52.

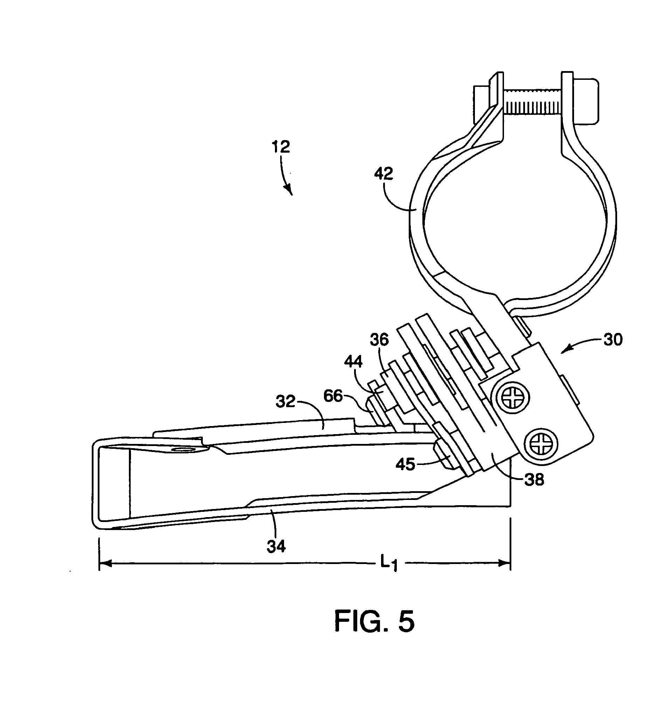

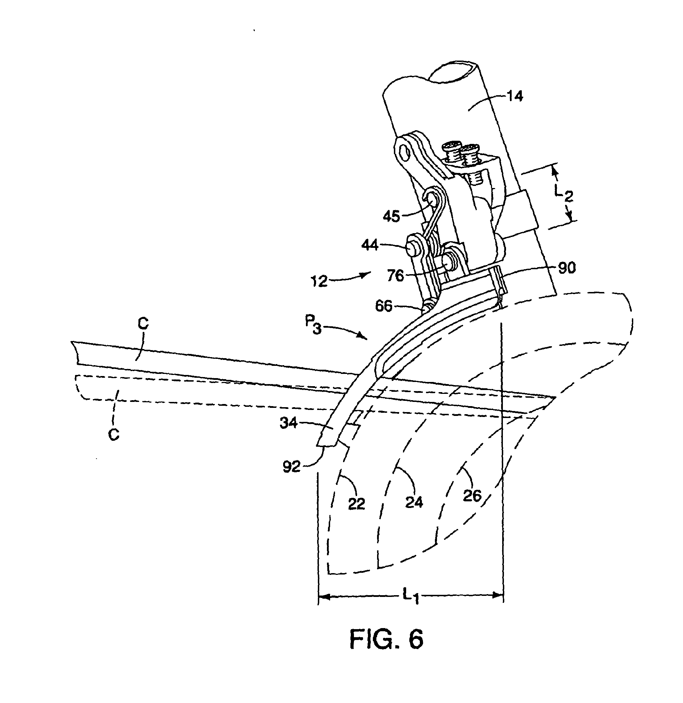

The chain guide 34 is preferably made of steel. The movable member 32 and the chain guide 34 are preferably made as a single member, but can alternatively be made of two separate portions attached to one another. The chain guide 34 has a horizontal length L₁ (a first distance), as shown in Figures 5 and 6 measured from front to back. As indicated in Figure 1, the chain guide 34 also extends in the first direction D₁ approximately parallel with the lengthwise direction of the frame 14 of the bicycle 10. More specifically, horizontal length L₁ is measured along or parallel to the first direction D₁.

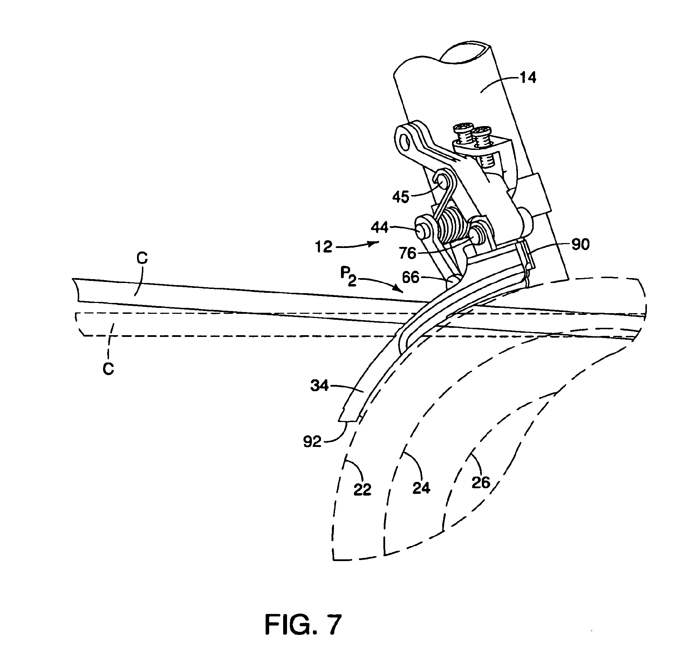

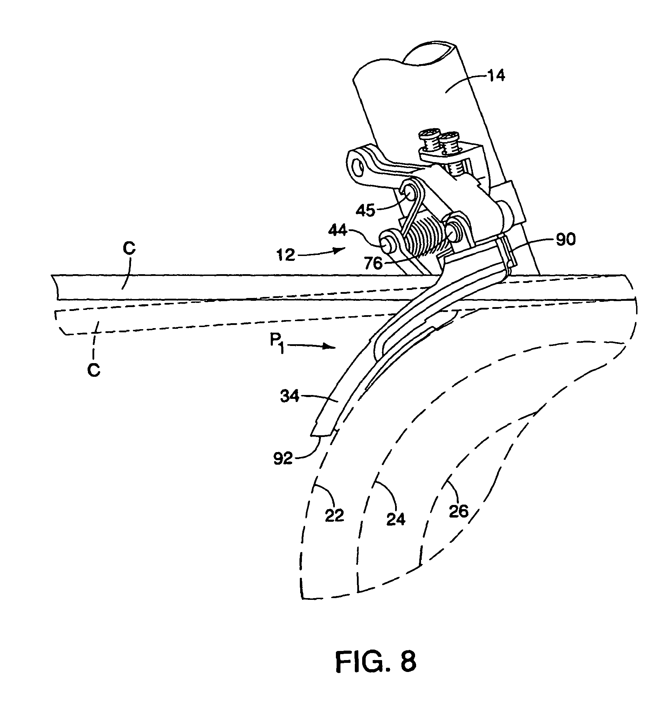

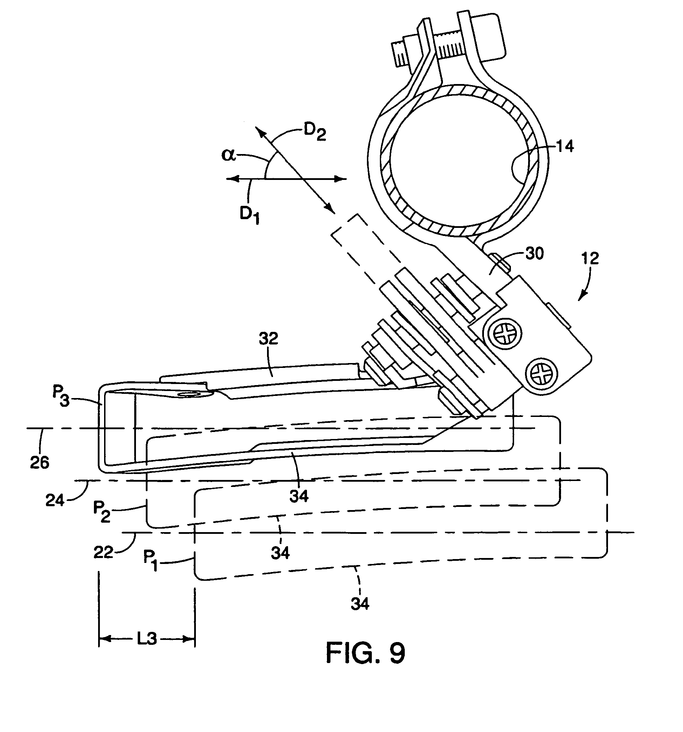

As indicated in Figure 9, the chain guide 34 is further configured to move along a path that extends in a second direction D₂. Specifically, the chain guide 34 moves relative to the fixed member 30 between at least a first chain ring position P₁ (Figures 8 and 9), a second chain ring position P₂ (Figures 7 and 9) and a third chain ring position P₃ (Figures 6 and 9). As shown in Figure 9, the second direction D₂ is oriented such that the chain guide 34 can move diagonally forward and away from the frame 14 of the bicycle 10. The chain guide 34 is biased by a spring 54 shown in Figures 2 and 3.

As shown in Figures 2 and 3, the first link 36 (the linking member) and the second link 38 (also a linking member) extend between the fixed member 30 and the chain guide 34. The first link 36 includes two first pivot portions 60 and 62 that are co-axially aligned with one another, a single second pivot portion 64 and a main body 65, as shown in Figure 4. The two first pivot portions 60 and 62 are configured to pivot about the pivot shaft 44. The first pivot portions 60 and the pivot shaft 44 define a first pivot axis A₁ that is fixed relative to the fixed member 30. The single second pivot portion 64 is configured to pivot about a pivot pin 66 that is installed in the second pivot portion 64 and further into the first pivot portion 50 of the movable member 32. The first link 36 is retained on the pivot shaft 44 by a clip or fastener. The pivot pin 66 retains the movable member 32 and the first link 36 axially in place by a clip 67 or fastener.

The pivot pin 66, the second pivot portion 64 and the first pivot portion 50 of the movable member 32 define a second pivot axis A₂ that is fixed to and extends from the movable member 32, as indicated in Figure 3. The main body 65 extends between the two first pivot portions 60 and 62 and the single second pivot portion 64 and includes a reinforcement section 68 that reinforces the single second pivot portion 64.

The first pivot axis A₁ and the second pivot axis A₂ are spaced apart from one another by a distance having a length L₂ (a second distance). In one embodiment of the present invention, the length L₂ (the second distance) and the horizontal length L₁ (the first distance) of the chain guide 34 are related. Specifically, the ratio between the horizontal length L₁ (the first distance) and the length L₂ (the second distance) is between 3.0 to 1 and 4.0 to 1. For example, in one embodiment, the horizontal length L₁ is approximately 75 mm and the length L₂ is approximately 22 mm. In this embodiment, the ratio between the horizontal length L₁ (the first distance) and the length L₂ (the second distance) approximately 3.4 to 1 (3.4:1). In prior art configurations the ratio is much greater, for example 8 to 1.

The second link 38 includes a link portion 70 and a lever portion 72. The link portion 70 includes a lower pivot portion 74 and an upper pivot portion 76 that are spaced apart from one another by a distance that is preferably the same as the length L₂. The lower pivot portion 74 includes an aperture dimensioned to receive a shaft 78. The shaft 78 is also pivotally installed in the second pivot portions 52 of the chain guide 34. Consequently, the chain guide 34 can pivot on the shaft 78 relative to the lower pivot portion 74 of the second link 38. The upper pivot portion 76 is pivotally installed on the pivot shaft 45 of the fixed member 30. Consequently, the second link 38 can pivot about the pivot shaft 45 relative to the fixed member 30. The second link 38 is retained on the pivot shaft 45 by a clip 67 or fastener. The movable member 32 is retained on the shaft 78 by a clip or fastener.

The lever portion 72 of the second link 38 includes a cable attachment portion connectable to a shift control cable for positioning the movable member 32 and the chain guide 34 to one of the first chain ring position P₁, the second chain ring position P₂ or the third chain ring position P₃.

As shown best in Figure 9, the first and second links 36 and 38 (the linking members) are configured to move the chain guide 34 in the second direction D₂ relative to the fixed member 30 and the bicycle 10. The chain guide 34 are further movable between the first chain ring position P₁ shown in Figures 8 and 9, the second chain ring position P₂ shown in Figures 7 and 9 and the third chain ring position P₃ shown in Figures 6 and 9. As is also shown in Figure 9, the first direction D₁ and the second direction D₂ cross or intersect one another with an angle α (alpha) therebetween. The angle α (alpha) is preferably between 50 and 70 degrees. More specifically as shown in Figure 9, the angle α (alpha) is approximately 60 degrees.

The specific numeric value of the angle α (alpha) is dependent upon a variety of design factors and cyclist preferences. For example, where the cyclist requires that front sprocket assembly 20 include the chain ring 22 having 42 teeth, the chain ring 24 having 32 teeth and the chain ring 26 having 22 teeth, (chain ring gear tooth combination 42-32-22) the angle α (alpha) preferably is approximately 60 degrees to provide adequate reach or movement of the chain guide 34. In such a configuration, the chain guide 34 can maintain a shortened horizontal length compared to the length L₂ between the pivot shafts 44 and 66, and pivot shafts 45 and 78.

In another configuration where the chain ring gear tooth combination is 50-30-20, the chain guide 34 can have a length L₁ of only 80 mm and the angle α (alpha) can be approximately 50 degrees.

In still another configuration where the chain ring gear tooth combination is 38-32-22, the chain guide 34 can have a length L₁ of only 40 mm and the angle α (alpha) can be approximately 70 degrees.

As shown in Figures 6, 7 and 8, the chain guide 34 is sufficiently large to guide the chain C between the first chain ring position P₁, the second chain ring position P₂ and the third chain ring position P₃. The chain guide 34 further provides clearance between a front end 90 and the chain C and a rear end 92 and the chain C, as shown in Figures 6, 7 and 8. It should further be appreciated that there is clearance for the chain C between both the front end 90 and the rear end 92 of the chain guide 34 regardless of the orientation of the chain C. Specifically, in Figures 6-8 the solid line representing the chain C corresponds to the chain C being positioned about the largest diameter of the chain rings of the rear sprocket assembly 16. Further, in Figures 6-8 the dashed line representing the chain C corresponds to the chain C being positioned about the smallest diameter of the chain rings of the rear sprocket assembly 16. However, the chain guide 34 is relatively short compared to the prior art and is therefore comparatively lighter providing an overall weight reduction of the front derailleur 12.

More specifically, the chain guide 34 of the present invention is smaller than prior art chain guides by a length L₃ as shown in Figure 9. Front derailleurs with chain guides movable in a direction perpendicular to the frame 14 require the chain guide length that is increased by the length L₃. The additional length L₃ in prior art chain guides is necessary to provide adequate clearance for movement of the chain C. For the depicted embodiment, the length L₃ represents a reduction in the overall length of the chain guide 34 of approximately 20 percent, compared to prior art chain guides.

It should be understood from the drawings and description herein that the chain ring gear tooth combinations and angles α (alpha) indicated above are only examples and only show the versatility of the present invention, but are not intended to limit the invention.

Hence, by virtue of the configuration of the present invention described above, the chain guide 34 can move between a plurality of chain rings and yet maintain a relatively short chain guide length. Thus, the weight of the front derailleur 12 is minimized and operation is maintained.

### GENERAL INTERPRETATION OF TERMS

In understanding the scope of the present invention, the term "configured" as used herein to describe a component, section or part of a device includes hardware that is constructed to carry out the desired function. In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts. As used herein to describe the present invention, the following directional terms "forward, rearward, above, downward, vertical, horizontal, below and transverse" as well as any other similar directional terms refer to those directions of a bicycle equipped with the present invention. Accordingly, these terms, as utilized to describe the present invention should be interpreted relative to a bicycle equipped with the present invention as used in the normal riding position. Finally, terms of degree such as "substantially", "about" and "approximately" as used herein mean a reasonable amount of deviation of the modified term such that the end result is not significantly changed.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents.

## Claims

1. A bicycle front derailleur (12) comprising:
a fixed member (30) coupled to a bicycle frame (14);
a chain guide (34) movably coupled to the fixed member (30); and
a linking member (36) extending between the fixed member (30) and the chain guide (34) and configured to support the chain guide (34) to move relative to the fixed member (30) between at least a first position (P1) and a second position (P2) forward and away from the bicycle frame, (14), the linking member (36) including a first pivot portion (60) configured to pivot about a first axis (A1) fixed relative to the fixed member (30), a single second pivot portion (64) that pivots about a second axis (A2) fixed to and extending from the chain guide (34), and a main body (65) extending between the first pivot portions (60) and the single second pivot portion (64),
**characterized in that** the linking member (36) includes two first pivot portions (60, 62) that are co-axially aligned with one another and configured to pivot about the first axis (A1),
wherein the main body (65) extends between the two first pivot portions (60, 62) and the single second pivot portion (64), the main body (65) including a reinforcement section (68) that reinforces the single second pivot portion (64).

2. The bicycle front derailleur (12) according to claim 1, wherein
the chain guide (34) extends in a first direction (D1) approximately parallel with a lengthwise direction of the bicycle frame (14), and the linking member (36) is configured to move the chain guide (34) relative to the fixed member (30) between at least the first position (P1) and the second position (P2) in a second direction (D2), the first and second directions (D1, D2) crossing one another with an angle (α) of between 50 and 70 degrees.

3. The bicycle front derailleur (12) according to claim 2, wherein the angle (α) is approximately 60 degrees.

## Patentansprüche

1. Vorderer Umwerfer (12) für Fahrräder, aufweisend:
ein feststehendes Element (30), das mit einem Fahrradrahmen (14) verbunden ist;
eine Kettenführung (34), die mit dem feststehenden Element (30) beweglich verbunden ist; und
ein Verbindungselement (36), das sich zwischen dem feststehenden Element (30) und der Kettenführung (34) erstreckt und konfiguriert ist, um die Kettenführung (34) zu tragen, so dass sie sich relativ zum feststehenden Element (30) zwischen mindestens einer ersten Position (P1) und einer zweiten Position (P2) nach vorne und weg vom Fahrradrahmen (14) bewegt, wobei das Verbindungselement (36) einen ersten Schwenkabschnitt (60), der konfiguriert ist, um um eine erste Achse (A1) zu schwenken, die relativ zum feststehenden Element (30) befestigt ist,
einen einzelnen zweiten Schwenkabschnitt (64), der um eine zweite Achse (A2) schwenkt, die an der Kettenführung (34) befestigt ist und sich von dieser aus erstreckt, und einen Hauptkörper (65) beinhaltet, der sich zwischen den ersten Schwenkabschnitten (60) und dem einzelnen zweiten Schwenkabschnitt (64) erstreckt,
**dadurch gekennzeichnet, dass** das Verbindungselement (36) zwei erste Schwenkabschnitte (60, 62) beinhaltet, die koaxial zueinander ausgerichtet sind und konfiguriert sind, um um die erste Achse (A1) zu schwenken, wobei sich der Hauptkörper (65) zwischen den zwei ersten Schwenkabschnitten (60, 62) und dem einzelnen zweiten Schwenkabschnitt (64) erstreckt,
wobei der Hauptkörper (65) einen Verstärkungsabschnitt (68) beinhaltet, welcher den einzelnen zweiten Schwenkabschnitt (64) verstärkt.

2. Vorderer Umwerfer (12) für Fahrräder nach Anspruch 1, wobei
die Kettenführung (34) sich in einer ersten Richtung (D1) näherungsweise parallel zu einer Längsrichtung des Fahrradrahmens (14) erstreckt, und das Verbindungselement (36) konfiguriert ist, um die Kettenführung (34) relativ zum feststehenden Element (30) zwischen zumindest der ersten Position (P1) und der zweiten Position (P2) in einer zweiten Richtung (D2) zu bewegen, wobei die erste und die zweite Richtung (D1, D2) einander mit einem Winkel (α) zwischen 50° und 70° überkreuzen.

3. Vorderer Umwerfer (12) für Fahrräder nach Anspruch 2, wobei der Winkel (α) näherungsweise 60° beträgt.

## Revendications

1. Dérailleur avant de bicyclette (12), comprenant :
un élément fixe (30) accouplé avec un cadre de bicyclette (14) ;
un guide chaîne (34) accouplé de façon mobile avec l'élément fixe (30) ; et
un élément de liaison (36) s'étendant entre l'élément fixe (30) et le guide chaîne (34) et configuré pour supporter le guide chaîne (34) pour se déplacer par rapport à l'élément fixe (30) entre au moins une première position (P1) et une seconde position (P2) vers l'avant et pour s'éloigner du cadre de bicyclette, (14), l'élément de liaison (36) comprenant une première partie de pivot (60) configurée pour pivoter autour d'un premier axe (A1) fixe par rapport à l'élément fixe (30), une seconde partie de pivot unique (64) qui pivote autour d'un second axe (A2) fixé au et s'étendant à partir du guide chaîne (34), et un corps principal (65) s'étendant entre les premières parties de pivot (60) et la seconde partie de pivot unique (64),
**caractérisé en ce que** l'élément de liaison (36) comprend deux premières parties de pivot (60, 62) qui sont alignées de façon coaxiale l'une avec l'autre et configurées pour pivoter autour du premier axe (A1), dans lequel le corps principal (65) s'étend entre les deux premières parties de pivot (60, 62) et la seconde partie de pivot unique (64), le corps principal (65) comprenant une section de renforcement (68) qui renforce la seconde partie de pivot unique (64).

2. Dérailleur avant de bicyclette (12) selon la revendication 1, dans lequel le guide chaîne (34) s'étend dans une première direction (D1) approximativement parallèle à une direction de longueur du cadre de bicyclette (14), et l'élément de liaison (36) est configuré pour déplacer le guide chaîne (34) par rapport à l'élément fixe (30) entre au moins la première position (P1) et la seconde position (P2) dans une seconde direction (D2), les première et seconde directions (D1, D2) se croisant avec un angle (α) d'entre 50 et 70 degrés.

3. Dérailleur avant de bicyclette (12) selon la revendication 2, dans lequel l'angle (α) est approximativement 60 degrés.
